# EUROPEAN PATENT SPECIFICATION

(11) **EP 0 469 758 B1**
(45) Date of publication and mention of the grant of the patent: **04.03.1998**
(21) Application number: 91306560.3
(22) Date of filing: 18.07.1991
(51) Int. Cl.: G05D 23/24

(54) **Apparatus for controlling heating of a liquid**
Vorrichtung zur Regelung einer Flüssigkeitsheizung
Appareil pour contrôler l'échauffement d'un liquide

(30) Priority: 30.07.1990 AU 1455/90
(43) Date of publication of application: 05.02.1992
(73) Proprietor: Black & Decker Inc., Newark Delaware 19711 (US)
(72) Inventor: McNair, John Duncan, Olinda Victoria 3788 (AU); Richards, David Alexander, Peakhurst New South Wales 2210 (AU)
(74) Representative: Stagg, Diana Christine

(56) References cited:
- DE-A- 1 773 107
- DE-A- 2 549 561
- DE-A- 3 404 091
- DE-A- 3 820 429
- US-A- 3 970 818
- FUNKSCHAU vol. 58, no. 17, August 1986, MUNCHEN DE pages 60- - 63 IMMO FREUDENBERG 'heizungs-regelung selbst gebaut'

## Description

The present invention relates to apparatus for controlling the heating of a liquid. In particular, the present invention relates to apparatus for controlling and/or monitoring the temperature of a liquid being heated.

Many liquid heating vessels, such as kettles, urns or jugs, utilise electronic controls to heat the liquid in the vessel to a predetermined temperature, and to maintain it at or near that temperature.

The basic vessel is generally made of an insulating material such as thermoplastic, thermoset plastic phenolic or porcelain china (such as old style jugs). The wall thickness is typically about 2 - 5 mm.

In most heating units for the vessels, the energy used is electrical, and the vessel incorporates, for example, a sheathed mineral insulated element, direct (wire in water) element, or dielectric (2 plate) unit. Other fuels such as gas or oil are also sometimes used. In the case of an electrical element a control circuit is used in the vessel. Typically, where electronic controls are used, the actual sensor is a temperature dependent resistor (or thermistor). In this case the thermistor changes its resistance in accordance with changes in the temperature around the thermistor. The output of the control is, in response to the changes sensed by the thermistor, either switched on or off (proportional control) or the power supplied to heat the liquid is changed using wave chopping phase modulation, or other known techniques are used to increase or decrease the amount of power supplied to the heating element as required.

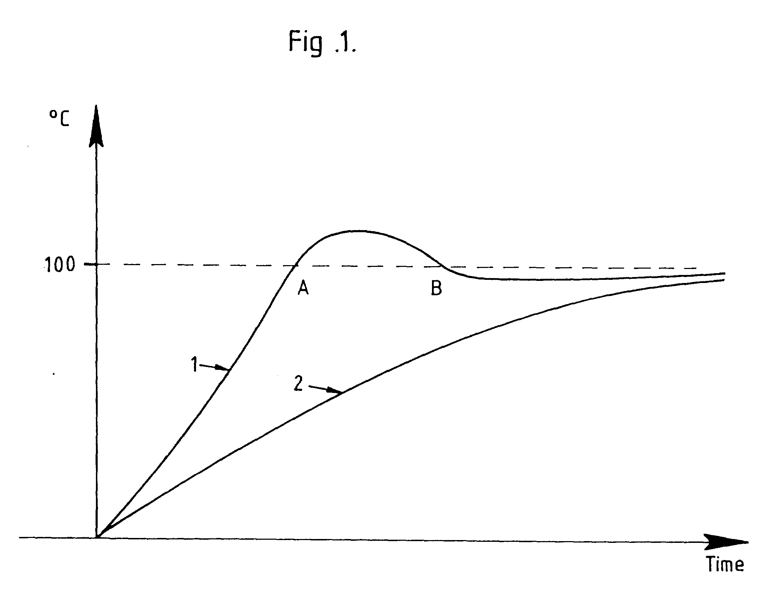

Figure 1 of the accompanying drawings illustrates some typical problems encountered in vessels used for the heating of fluids, for example water. Path 1 represents the temperature of liquid in a vessel when a great deal of energy is used to heat the liquid quickly. The liquid temperature rises in a short period of time and, when the liquid temperature approaches boiling point (100°), and just before point A, power is switched off from the heating element. However, the liquid temperature continues to increase undesirably into "boil over", between points A and B, before reducing to reach the desired liquid temperature (say 98°C). In the case of an urn or large liquid heating vessel, this temperature must then be maintained. Energy is wasted between points A and B.

Path 2 illustrates an alternative, where the liquid is heated slowly over a long period of time. This avoids "boil over"; however, it takes far too long for the liquid to reach its desired temperature.

The problems illustrated in Figure 1 principally stem from:
(1) The time constraint of the liquid temperature monitoring device (thermistor);
(2) Thermal "lag" due to indirect sensing;
(3) Changes in ambient temperature; and
(4) The proximity of the desired temperature to the boiling point of the liquid, for example water (100°C).

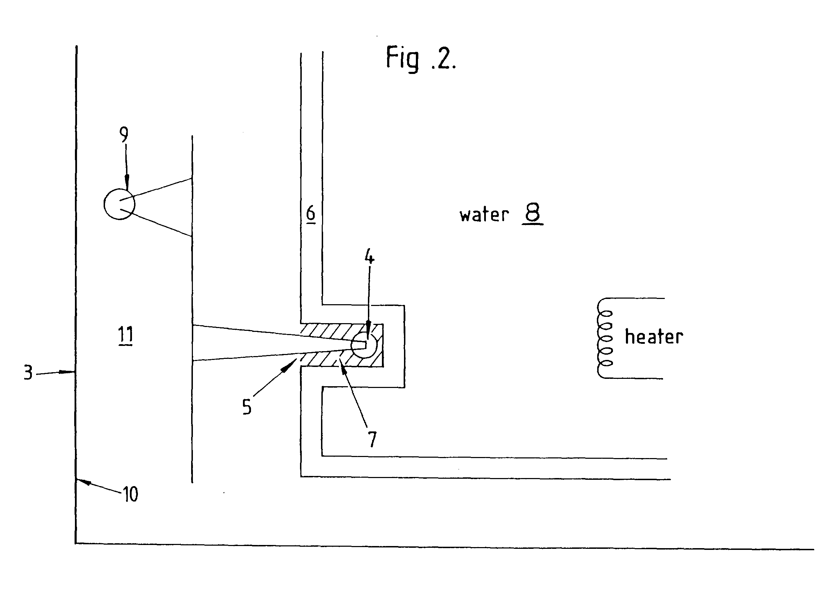

These problems appear to result for the following reasons:
(1) In liquid vessels, with a thermistor located in the liquid (direct sensing), the reaction time of the thermistor itself, on fast heating units, can cause "overshoot" in simple controls as shown in Figure 1, path 1. Also technical problems exist of isolating the thermistor leads electrically, as well as preventing corrosion thereof. This generally leads to a design that to all intents, resembles the indirect designs described below.
(2) As shown in Figure 2, a typical indirect sensing application is shown in a water heating urn 3. The water temperature sensing thermistor 4 is pushed into a preformed pocket 5 either provided in the water heating chamber wall 6 or integrally moulded with the vessel wall. Generally, a heat conducting paste 7 is used to enhance the sensing of the water 8 temperature by the thermistor 4. Thermal lag occurs due to the time required for a temperature change in the liquid to be transmitted through the vessel wall 6, the paste 7 and the body of the thermistor-4 before being (electronically) sensed by the thermistor.
(3) An ambient thermistor 9 actually reads a temperature somewhere between the temperature of the water 8 and the temperature of the air 11 which exists between the water heating chamber 6 and the outside wall 10 of the urn 3.A printed circuit board (PCB) is mounted to carry the ambient temperature thermistor 9 and the water temperature thermistor 4. From cold start up, the temperature around the PCB will rise slowly from room ambient temperature to steady state operating temperature, providing delays in heating the liquid as desired.
(4) Water at normal atmospheric pressure boils at 100°C. However, at or above 100°C, any energy added is dissipated as steam as no increase in temperature is possible. If water temperature is desired at say 97°C, and if the heating rate is faster than the thermistor/thermal lag etc. can cope with, then the water temperature will pass through 97°C, through boiling point, and the liquid will boil until the thermistor catches up. This could be, typically, half a minute or more as shown in Figure 1, path 1. This is due to the fixed "set point" by which the heater element control is influenced. The "set point" is the temperature sensed at which the heating control circuit turns off or reduces heating of the liquid, while heating the liquid to a desired level. More importantly, if the vessel heating control is of the on/off type, then the full element wattage is applied to the water after boiling, and this is undesirable.

An oven temperature control taking into account the ambient temperature has been disclosed in US-A-3 970 818.

It is an object of the present invention to provide a liquid heating vessel which heats liquid quickly without excessive undesirable "boil over".

It is a further object of the present invention to provide a liquid heating vessel which compensates for thermal lag in the measurement of temperature.

It is a further object of the present invention to provide a liquid heating vessel with a simple, inexpensive adjustable "set point" that will compensate for heating up as well as ambient temperature changes.

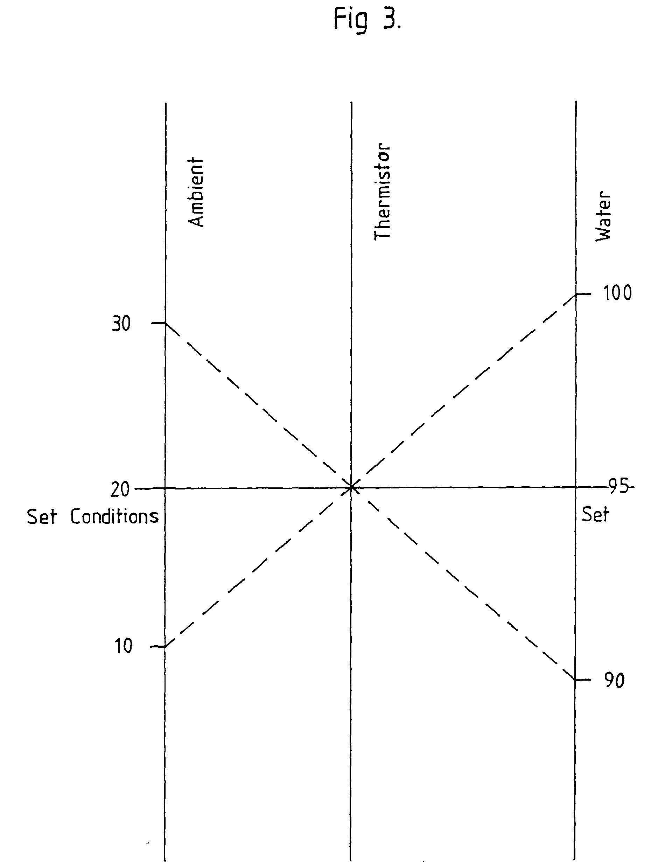

It has surprisingly been found that ambient temperature has effect on operating temperature with regard to the "boil over" of a liquid heating vessel. As shown in Figure 3, it has been observed that, if ambient temperature is normalized at 20°C, and the desired water temperature is 95°C, the heating controller set point should be set to switch off or reduce power to the heating element at 75°C, as measured by the water temperature sensing thermistor 4 of Figure 2.

However, if ambient temperature is 30°C, the vessel will heat water to only 90°C, when the thermistor senses 75°C, and if ambient temperature is 10°C, the vessel will heat water to 100°C ("boil over").

The present invention provides a temperature control device for a liquid heating vessel, which device comprises

liquid temperature sensing means adapted to provide an indication of the temperature of liquid in the vessel; and control means adapted to regulate the supply of heat to the liquid during a heating action in accordance with a set point temperature;
characterised in that the device further comprises set point means comprising a second temperature sensing means adapted to sense temperature on an outer wall surface of the liquid heating vessel and for providing also an indication of ambient temperature, the set point means being coupled to said control means wherein the set point means is adapted to provide an adjustable set point, the set point means being influenced by the sensed ambient temperature and adjusting the set point temperature substantially to prevent the temperature of the fluid rising to an undesirable level.

Preferred embodiments of the present invention will now be described with reference to the accompanying drawings, in which:
Figure 1 shows, diagrammatically, water temperature against time as water is heated;
Figure 2 shows a prior art water temperature control;
Figure 3 shows, diagrammatically, the relationship between final water temperature and ambient water temperature with a fixed set point control device;
Figure 4 shows a circuit diagram of one embodiment of the present invention;
Figure 5 shows one embodiment of the present invention;
Figure 6 shows, in more detail, the ambient thermistor located against the wall of the liquid vessel in the embodiment of Figure 5; and
Figure 7 shows, diagrammatically, the practical results of the adjustable set point with regard to heating of water.

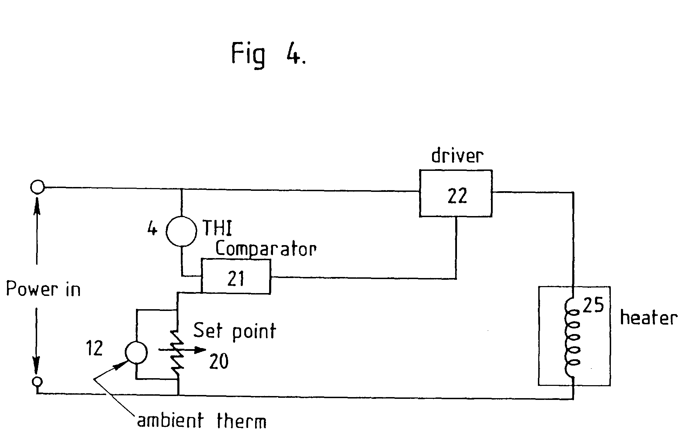

With regard to Figure 4, a possible circuit arrangement is disclosed for carrying out the present invention although other circuits might also be used. In the circuit illustrated the thermistor 4 senses liquid temperature, and is compared by comparator 21 with an adjustable set point. The adjustable set point is provided, in this embodiment, by an adjustable resistor 20 in parallel with ambient thermistor 12. As the sensed ambient temperature is increased, the set point resistances (20 and 12) alter. When the resistance of thermistor 4 and set point 20/12 are equal, the comparator will turn off or control the driver 22 to reduce the power supplied to heater 24.

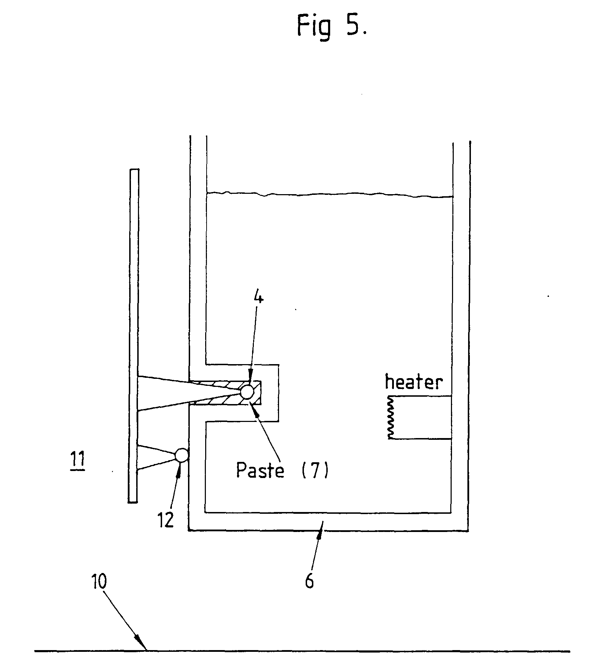

Figure 5 shows one embodiment of the present invention as applied to a liquid heating vessel. The liquid vessel is similar to that of Figure 2, except that the ambient thermistor 9 is replaced by set point thermistor 12. In this embodiment the thermistor 12 engages the outside of the liquid heating vessel 6 thermally so that it is influenced by both ambient temperatures and the temperature of the liquid within the vessel.

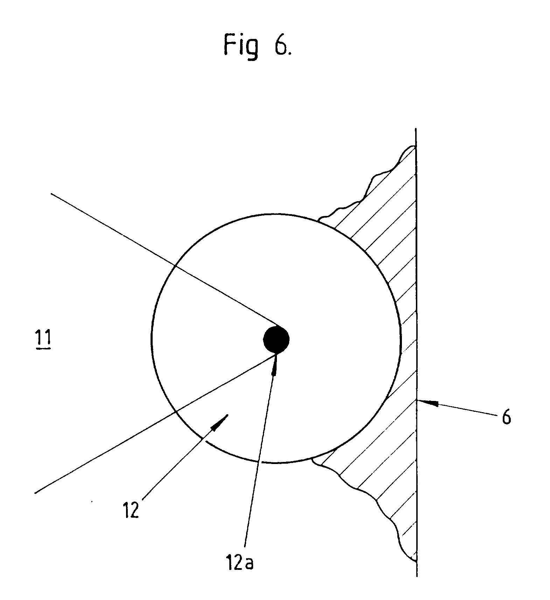

Figure 6 shows in greater detail the location of thermistor 12. The actual temperature measurement is sensed inside the body of the thermistor 12 at point 12a. At this point 12a, heat is sensed from the wall 6 which in turn is influenced by the water being heated, and point 12a is also influenced by the temperature of the ambient air 11 proximate the vessel wall 6. The temperature of the liquid being heated is thus not dependent on ambient air temperature alone. Thus the measurement sensed at point 12a is somewhere between the actual temperature of the liquid in the vessel and ambient air temperature around the vessel.

As the water heats up, the temperature at point 12a increases, thus adjusting the set point of the control circuit for the heater element.

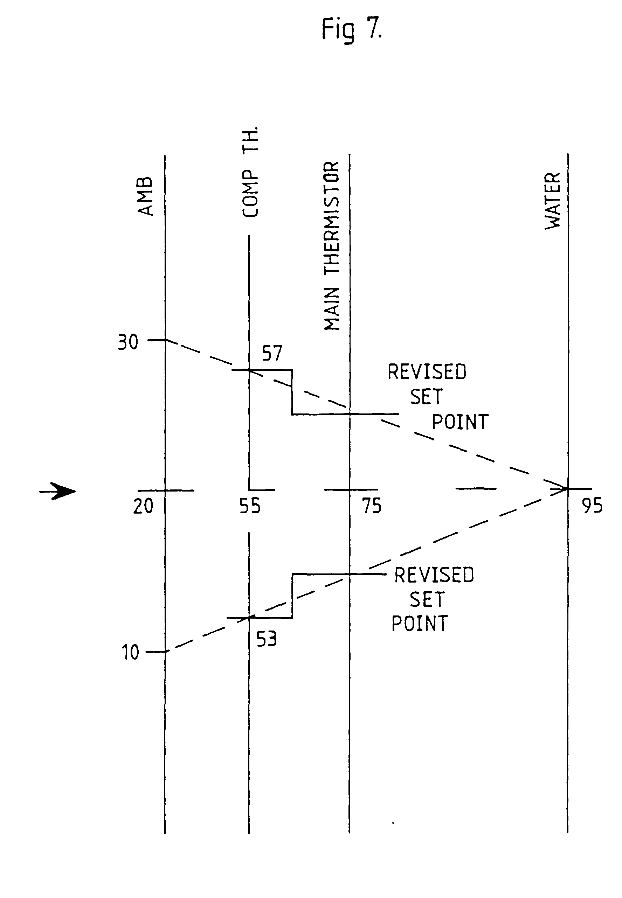

Figure 7 shows diagrammatically the results of the present invention. In comparison with Figure 3, it can be seen that the heated water temperature will always be heated to the desired temperature (say 95°C) independent of ambient temperature. In this example, if ambient temperature is 10°C, at point 12a, the temperature sensed is 53°C, resulting in a set point being reduced below 75°C, in order to turn the heater off earlier to heat the water to 95°C. Whereas, if the ambient temperature is 30°C, point 12a senses 57°C, the set point is increased above 75°C, and the heater is turned off later to obtain water heated to 95°C.

Alternative embodiments, may include a "look-up table" for example, memory means coupled to a microprocessor in order to adjust the set point and control the liquid heating. In this alternative embodiment, ambient temperature and a fixed set point can be sensed and provided as input to a look-up table which will provide an adjusted set point as output for use by the control circuitry.

## Claims

1. A temperature control device for a liquid heating vessel, which device comprises
liquid temperature sensing means (4) adapted to provide an indication of the temperature of liquid in the vessel; and control means (22) adapted to regulate the supply of heat to the liquid during a heating action in accordance with a set point temperature;
characterised in that the device further comprises set point means (12,20) comprising a second temperature sensing means (12) adapted to sense temperature on an outer wall surface of the liquid heating vessel and for providing also an indication of ambient temperature, the set point means (12,20) being coupled to said control means (22) wherein the set point means (12,20) is adapted to provide an adjustable set point, the set point means being influenced by the sensed ambient temperature and adjusting the set point temperature substantially to prevent the temperature of the fluid rising to an undesirable level.

2. A temperature control device for a liquid heating vessel, according to claim 1 characterised in that the set point is increased for an ambient temperature higher than the normalized ambient temperature and is decreased for an ambient temperature lower than said normalized ambient temperature.

3. A liquid heating vessel, characterised in that it includes a control device as claimed in claim 1 or claim 2.

## Patentansprüche

1. Temperatursteuerungsvorrichtung für einen Flüssigkeits-Heizkessel, wobei die Vorrichtung aufweist:
eine Flüssigkeitstemperaturerfassungseinrichtung (4), die dazu ausgestaltet ist, um eine Angabe über die Temperatur der Flüssigkeit in dem Kessel zu liefern; und eine Steuerungseinrichtung (22), die dazu ausgestaltet ist, um während des Aufheizvorgangs die Wärmezufuhr zur Flüssigkeit entsprechend einer Sollwert-Temperatur zu regeln;
dadurch gekennzeichnet, daß die Vorrichtung außerdem eine Sollwert-Einrichtung (12, 20) mit einer zweiten Temperaturerfassungseinrichtung (12) aufweist, die dazu ausgestaltet ist, um die Temperatur an einer Außenwand des Flüssigkeits-Heizkessels zu erfassen und um außerdem eine Angabe über die Umgebungstemperatur zu liefern, daß die Sollwert-Einrichtung (12, 20) mit der Steuerungseinrichtung (22) gekoppelt ist, daß die Sollwert-Einrichtung (12, 20) dazu ausgestaltet ist, um einen einstellbaren Sollwert zu liefern, und daß die Sollwert-Einrichtung durch die erfaßte Umgebungstemperatur beeinflußt wird und die Sollwert-Temperatur im wesentlichen einstellt, um zu verhindern, daß die Temperatur der Flüssigkeit auf einen nicht gewünschten Wert ansteigt.

2. Temperatursteuerungsvorrichtung für einen Flüssigkeits-Heizkessel nach Anspruch 1, dadurch gekennzeichnet, daß der Sollwert für eine Umgebungstemperatur angehoben wird, die höher ist als die normalisierte Umgebungstemperatur, und für eine Umgebungstemperatur abgesenkt wird, die niedriger ist als die normalisierte Umgebungstemperatur.

3. Flüssigkeits-Heizkessel, dadurch gekennzeichnet, daß er eine Steuerungsvorrichtung nach Anspruch 1 oder Anspruch 2 aufweist.

## Revendications

1. Un dispositif de réglage de température pour un récipient de chauffage de liquide, dispositif qui comprend:
un moyen de détection (4) de la température du liquide apte à fournir une indication de la température du liquide dans le récipient; et un moyen de réglage (22) apte à réguler l'amenée de chaleur au liquide au cours d'un processus de chauffage en fonction d'une température de point de consigne;
caractérisé en ce que le dispositif comprend en outre un moyen (12, 20) de point de consigne comprenant un deuxième moyen détecteur (12) de température apte à détecter la température sur une surface de paroi extérieure du récipient de chauffage du liquide et à fournir aussi une indication de la température ambiante, le moyen (12, 20) de point de consigne étant couplé audit moyen de réglage (22), le moyen (12, 20) de point de consigne étant apte à réaliser un point de consigne réglable, le moyen de point de consigne étant influencé par la température ambiante détectée et ajustant la température de point de consigne sensiblement de manière à empêcher que la température du fluide ne dépasse un niveau souhaitable.

2. Un dispositif de réglage de la température pour un récipient de chauffage de liquide, selon la revendication 1, caractérisé en ce que le point de consigne est augmenté pour une température ambiante supérieure à la température ambiante normalisée et est diminué pour une température inférieure à ladite température ambiante normalisée.

3. Un récipient de chauffage de liquide, caractérisé en ce qu'il inclut un dispositif de réglage selon la revendication 1 ou la revendication 2.
